# EUROPEAN PATENT SPECIFICATION

(11) **EP 3 569 660 B1**
(45) Date of publication and mention of the grant of the patent: **10.11.2021**
(21) Application number: 18173343.7
(22) Date of filing: 18.05.2018
(51) Int. Cl.: C09B 7/12, C09B 67/44, D06P 1/22, C09B 67/54, B01D 19/00, B01D 3/38, C09B 7/02, D06P 1/673

(54) **METHOD FOR MAKING ANILINE-FREE LEUCOINDIGO SALT SOLUTIONS**
VERFAHREN ZUR HERSTELLUNG VON ANILINFREIEN LEUCOINDIGO-SALZLÖSUNGEN
PROCÉDÉ POUR FABRIQUER DES SOLUTIONS DE SEL DE LEUCOINDIGO SANS ANILINE

(43) Date of publication of application: 20.11.2019
(73) Proprietor: Archroma IP GmbH, 4153 Reinach (CH)
(72) Inventor: LUCIC, Erwin, Singapore 609917 (SG); HÜBNER, Jorg, 69115 Heidelberg (DE); HYETT, David, 6132 HS Sittard (NL); JANSSEN, Michèle Catherine Christianne, 5645 LB Eindhoven (NL); WOESTENBORGHS, Pierre L., 3650 Dilsen-Stokkem (BE); BESSEMBINDER, Karin Hendrika Maria, 5625 SK Eindhoven (NL); RIJKERS, Marinus Petrus Wilhelmus Maria, 6181 DH Eisloo (NL)
(74) Representative: Ricker, Mathias

(56) References cited:
- WO-A2-2004/024826
- US-A- 5 116 996
- US-B1- 6 428 581

## Description

### FIELD OF THE INVENTION

The invention relates to a method of making aniline-free leucoindigo salt solutions.

### BACKGROUND OF THE INVENTION

Indigo is a vat dye used for dyeing cellulose-containing textile materials.

Since indigo has a low solubility in water it is subjected to reduction prior to application on a textile material, wherein a water-soluble leucoindigo salt is formed. This salt is then applied in aqueous solution to the textile material. Oxidation of the leucoindigo salt results in the formation of indigo, wherein the dyed textile material is obtained.

Synthetically produced indigo contains impurities based on aromatic amines due to the commonly used production processes, in particular aniline and/or N-methylaniline. For example, synthetically produced indigo may contain up to 6,000 ppm aniline and up to 4,000 ppm N-methylaniline. Aromatic amines such as aniline and N-methylaniline are not desired in textile applications. Thus, these impurities should be removed as far as possible from indigo, respectively the leucoindigo salt made therefrom, prior to the application on the textile material.

DE 43 36 032 A1 discloses in Example 1 a process for purifying indigo comprising extracting an aqueous leucoindigo sodium salt solution with an inert solvent under oxygen-excluding conditions and conventionally regenerating the indigo by oxidation. The obtained indigo is free from aniline and N-methylaniline.

WO 2004/024826 A2 suggests removing aromatic amine impurities on the stage of the aqueous leucoindigo salt solution by distillation, steam distillation, extraction or by stripping with an inert gas. This prior art discloses that the concentration of aromatic amines may be reduced below a concentration of 200 ppm applying the purification methods defined therein. The purified leucoindigo salt solution may then be subjected to oxidation in order to obtain indigo containing said low amounts of aromatic amines, if any. The purified leucoindigo may be present on a textile material prior to the oxidation. Specifically, WO 2004/024826 A2 discloses the following:

Example 1 of WO 2004/024826 A2 discloses a solution containing 55 % by weight leucoindigo in the form of a mixed sodium and potassium salt obtained from a non-purified leucoindigo salt solution having a salt concentration of 23 % by distillation under normal pressure, wherein in the purified solution the concentration of aniline is less than 200 ppm, and the concentration of N-methylaniline is less than 20 ppm.

Example 2 discloses a solution containing 23 % by weight leucoindigo in the form of a mixed sodium and potassium salt obtained from a non-purified leucoindigo salt solution by threefold extraction, wherein in the purified solution the concentration of aniline is 147 ppm. N-methylaniline is no longer detectable.

Example 3 discloses a solution containing 23 % by weight leucoindigo in the form of a mixed sodium and potassium salt obtained from a non-purified leucoindigo salt solution by stripping with nitrogen, wherein in the purified solution the concentration of aniline is 113 ppm. N-methylaniline is no longer detectable.

Example 4 discloses a leucoindigo solution in the form of a mixed sodium and potassium salt obtained by steam distillation of a non-purified leucoindigo salt solution. Aniline and N-methylaniline are no longer detectable. The solution has a leucoindigo concentration of 7 % by weight. However, this low-concentrated solution it is not applicable to achieve middle or deep shades. Consequently, such leucoindigo solution would not be of interest for applications at an industrial scale.

It is further known that for transportation and application an aqueous leucoindigo salt solution should be as stable as possible in order to prevent undesired crystallization and/or precipitation of the salt. This is in particular important if the leucoindigo salt is present in the aqueous medium in a relative high concentration. Concentrated leucoindigo salt solutions are advantageous in the vat dying process due to a reduced wastewater contamination.

In this respect WO 00/04100 suggests providing an aqueous leucoindigo solution in the form of a mixed sodium and potassium salt, wherein the mol-% of sodium is in the range of from 70 to 30, and the mol-% of potassium is correspondingly in the range of from 30 to 70. This corresponds to a molar ratio of sodium to potassium in the range of from 2.33 : 1 to 1 : 2.33. Within said range, despite a relative high concentration of the leucoindigo salt of from 25 to 40 % by weight, said dissolved leucoindigo salt solution is stable at room temperature, or is stable at an increased temperature in the range of from 40 to 60 °C in case of a concentration between 50 and 55 % by weight, i.e. the salt is not prone to crystallization or precipitation. This prior art further discloses a molar ratio of sodium to potassium in the range of from 3 : 1 to 1 : 3, which corresponds to a mol-% range of sodium of from 75 to 25, and potassium of from 25 to 75.

WO 00/04100 further discloses with reference to WO 94/23114 that a solution of leucoindigo in the form of a sodium salt is stable up to a concentration of 20 % by weight at room temperature.

WO 00/04100 further discloses that from diluted leucoindigo solutions water may be distilled off in order to concentrate them. E.g., from a solution having a concentration of 25 % by weight of leucoindigo, approx. 44 % by weight water may be distilled off in order to concentrate the solution up to 38 % by weight (Example 4).

Example 5 of WO 00/04100 discloses that from an aqueous solution containing 20 % by weight leucoindigo about 34 % water are distilled off in order to concentrate the solution to 27 % by weight.

WO 00/04100 is silent regarding aniline and N-methylaniline concentrations.

US 5 116 996 discloses a method for purifying indigo.

### OBJECTS OF THE INVENTION

An increased need exists in the industry for providing concentrated leucoindigo salt solutions which are aniline-free or aniline-free and N-methylaniline-free. Therefore, the problem to be solved by the present invention was to provide. aniline-free leucoindigo salt solutions and aniline-free indigo.

### SUMMARY OF THE INVENTION

The invention relates to a method of making an aqueous aniline-free and N-methylaniline-free leucoindigo solution from an aqueous leucoindigo solution comprising aniline or aniline and N-methylaniline as defined in claim 1. Preferred embodiments are specified in the claims depending thereon.

A particular advantage of the method according to the invention is that concentrated solution leucoindigo salt solutions may be prepared, preferably in the range of from 10 to 65 % by weight such as 15 to 60 % by weight or 20 to 55 % by weight or 25 to 50 % by weight, which comply with the dyeing requirements in terms of middle and deep shades, and which are aniline-free or aniline-free and N-methylaniline-free. Also the requirements of a reduced wastewater contamination in dyeing factories may be met.

Moreover, the method does not only provide aniline-free and N-methylaniline-free and high-concentrated leucoindigo solutions and indigo made therefrom, but provides the following additional beneficial advantage:

As is generally known, purification methods of leucoindigo solutions based on distillation and stripping as described in the prior art above are typically accompanied by foam formation. This foam formation may severely hamper the economical realization at an industrial scale due to modest space yields. Furthermore, foam may result in crusting in the used equipment which also may negatively affect both the process and the quality of the formed product.

Contrary to this, the inventors of the present invention discovered that the method according to the inventionallows reducing foaming to such an extent that an advantageous economical realization at an industrial scale is possible resulting in a high space yield and a product of high quality.

### DETAILED DESCRIPTION OF THE INVENTION

The term "aniline-free" as used in this disclosure defines an aniline concentration below 100 ppm, preferably below 80 ppm, more preferred below 60 ppm, still more preferred below 40 ppm, in particular below 30 ppm or below 20 ppm, and particularly preferred below 10 ppm or below 5 ppm, the concentration being determined according to ISO 14362-1:2017(E).

The term "aniline-free and N-methylaniline-free" as used in this disclosure defines an aniline concentration and an N-methylaniline concentration below 100 ppm, preferably below 80 ppm, more preferred below 60 ppm, still more preferred below 40 ppm, in particular below 30 ppm or below 20 ppm, and particularly preferred below 10 ppm or below 5 ppm, the concentration being determined according to ISO 14362-1:2017(E).

### Method according to the invention

According to a **first aspect,** the invention relates to a method of making an aqueous aniline-free or aniline-free and N-methylaniline-free leucoindigo solution from an aqueous leucoindigo solution comprising aniline or aniline and N-methylaniline, the concentration of aniline or aniline and N-methylaniline being determined according to ISO 14362-1:2017(E), wherein said leucoindigo is in the form of an alkali metal salt, the method comprising at least steps (A) to (C):
(A) providing a liquid stream comprising said aqueous leucoindigo solution comprising said amine(s);
(B) providing a purification stream;
(C) bringing into contact said liquid stream with said purification stream;
wherein step (C) comprises steps (C1) and (C2) and the method further comprises steps (D) and (E):
(A) providing a liquid stream comprising said aqueous leucoindigo solution comprising said amine(s);
(B) providing a purification stream;
(C1) feeding said liquid stream and
(C2) feeding said purification stream
   into a device configured to bring into contact said liquid stream with said purification stream;
(D) discharging from the device at least a portion of said purification stream that has contacted said liquid stream; and
(E) discharging from the device at least a portion of said liquid stream that has been contacted by said purification stream;
as defined in claim 1.

According to the invention, step (A) requires providing a liquid stream comprising said aqueous leucoindigo solution comprising said amine(s). Said providing preferably is performed by discharging a leucoindigo salt solution from a respective storage container or directly from a reduction device in which the leucoindigo salt solution is made by reduction of indigo. The discharged solution is in a flowing condition, e.g. either under the influence pressure, gravity or a pump, and thus forms a stream. Preferably, the flow of the solution is directed via a pipe to the device used in step (C1).

Further according to the invention, step (B) requires providing a purification stream. Said providing preferably is performed by discharging a suitable purification liquid or purification vapor from a respective storage container. The discharged purification liquid or vapor is in a flowing condition, e.g. either under the influence pressure, gravity or a pump, and thus forms a stream. Preferably, the flow of the solution or vapor is directed via a pipe to the device used in step (C2).

The term "purification stream" provided in step (B) denotes any substance being suitable to remove from or at least to lower the content of aniline or aniline and N-methylaniline in a leucoindigo solution comprising said amine(s), wherein said leucoindigo is in the form of a salt

In a preferred embodiment, said purification stream is generated from a vapor which may then also be denoted as purification vapor.

Said vapor may be generated and kept under pressure in a suitable container, wherein upon release of vapor from said container said vapor is in a flowing condition, thus forming a stream. Preferably, the released vapor is directed through a pipe to the device used in step (C2).

The term "vapor" as used herein encompasses or denotes a substance or compound in the gas phase. Typically, such vapor is produced by heating a substance or compound above its boiling point. The term "vapor" also encompasses a compound or substance which is present in form of small droplets dispersed in a gas phase, and thus forms an aerosol.

According to the invention, said vapor or vapor stream is or comprises steam.

The term "steam" as used herein denotes vaporized water.

In one embodiment, said vapor or vapor stream comprises steam and nitrogen or consists of steam and nitrogen.

In one embodiment, said steam is generated by heating water in a pressure vessel to a temperature of 100 °C or above 100 °C. High pressure steam at approx. 10 bars and 200 °C, or low pressure steam at approx. 0.5 bars and 100 °C may be used in the method according to the invention.

In a preferred embodiment, said steam is additionally or alternatively generated by heating at least a portion of said liquid stream that has been discharged from the device according to step (E). For heating, e.g. a heat exchanger may be used.

In one embodiment, the amount of heat entering the device generated from the purification stream fed according to step (C2) and heat entering with the liquid stream fed according to step (C1) is controlled such that it equals the amount of heat removed in steps (D) and (E) since addition of excess or insufficient heat to the device can lead to foaming or flooding. Accordingly, the method is performed such to achieve adiabatic conditions.

In another embodiment, the amount of heat entering the device generated from the heated portion of said liquid stream that has been discharged from the device according to step (E) and heat entering with the liquid stream fed according to step (C1) is controlled such that it equals the amount of heat removed in steps (D) and (E) since addition of excess or insufficient heat to the device can lead to foaming or flooding. Accordingly, the method is performed such to achieve adiabatic conditions.

Further according to the invention, steps (C1) and (C2) require feeding said liquid stream and said purification stream into a device configured to bring into contact said liquid stream with said purification stream such as a vapor stream.

In one embodiment, said device comprises a liquid stream inlet or liquid stream inlets for feeding the liquid stream, and a purification stream inlet or purification stream inlets such as a vapor stream inlet or vapor stream inlets for feeding the purification stream in the form of a vapor stream.

The inlets may be provided at any location of the device, i.e. the inlets may be provided at the bottom or the top or at the sidewalls of the device.

In one embodiment, the liquid stream inlet(s) is/are provided at the bottom of the device, and the purification stream inlet(s) at the top, or vice versa.

In another embodiment, the liquid stream inlet(s) is/are provided at sidewalls of the device, and the purification stream inlet(s) at the bottom or the top of the device.

In another embodiment, the purification stream inlet(s) is/are provided at sidewalls of the device, and the liquid stream inlet(s) at the bottom or the top of the device.

Preferably, the purification stream inlet(s) and/or the liquid stream inlet(s) is/are designed in the form of a sparger or spargers. The use of perforated sheets as purification stream inlets and/or liquid stream inlets is also possible.

In one embodiment, the bringing into contact is performed such that the device is partly or completely filled with liquid originating from the liquid stream, and the purification stream inlet(s) is/are arranged such that the fed purification stream necessarily must flow through the liquid.

In another embodiment, the liquid stream and purification stream inlet(s) are arranged such that the streams cross each other.

In another embodiment, the bringing into contact of the streams may be performed in a counter-current manner.

In another embodiment, the bringing into contact of the streams may be performed in a co-current manner, e.g. when liquid and purification inlet(s) are identical, i.e. the streams are fed via a common inlet or common inlets.

In another embodiment, the device contains means for guiding the liquid stream and the purification stream such that they contact one another. Such means are known in the art. Exemplarily mentioned are plates and filling materials such as Raschig rings.

The term "plate" as used herein is synonymously used with the term "tray".

The term "filling material" as used herein is synonymously used with the term "packing".

According to the invention, step (D) requires discharging from the device at least a portion of said purification stream in the form of a vapor stream that has contacted said liquid stream.

Accordingly, in one embodiment, said device comprises a purification stream outlet or purification stream outlets for discharging at least a portion of said purification stream that has contacted said liquid stream.

Further according to the invention, step (E) requires discharging from the device at least a portion of said liquid stream that has been contacted by said purification stream in the form of a vapor stream.

Accordingly, in one embodiment, said device comprises a liquid stream outlet or liquid stream outlets for discharging at least a portion of said liquid stream that has been contacted by said purification stream in the form of a vapor stream.

Basically, the outlets may be arranged in a manner as discussed with respect to the purification stream and liquid stream inlets, i.e. at the bottom, at the top, or at the sidewalls of the device.

In a preferred embodiment, the purification stream inlet(s) is/are arranged at a lower portion of the device, and the liquid stream inlet(s) are arranged at an upper portion of the device.

In a corresponding preferred embodiment, the purification stream outlet(s) such as vapor outlet(s) is/are arranged at an upper portion of the device, and the liquid stream outlet(s) are arranged at a lower portion of the device.

In a particularly preferred embodiment, the purification stream inlet(s) is/are arranged at the bottom of the device, and the liquid stream inlet(s) are arranged at the top of the device.

In a corresponding particularly preferred embodiment, the purification stream outlet(s) is/are arranged at the top of the device, and the liquid stream outlet(s) are arranged at the bottom of the device.

Accordingly, in a preferred embodiment, said liquid stream and said purification stream such as a vapor stream are counter-current streams.

In a further preferred embodiment, said liquid stream and said purification stream such as a vapor stream are counter-current streams, wherein the liquid stream flows downwards, and the purification stream flows upwards.

The purification stream discharged from the purification outlet(s) in the form of vapor outlet(s) comprises aniline or aniline and N-methylaniline.

The result of the method according to the invention is that the concentration of aniline or aniline and N-methylaniline of the liquid stream discharged according to step (E) from the liquid stream outlet(s) is lower than the concentration of aniline or aniline and N-methylaniline of the liquid stream fed to the device according to step (C1) via the liquid stream inlet(s).

In one embodiment, temperature and flow rate of the purification stream such as a vapor stream fed into the device according to step (C2) are selected such that the split ratio is below 70 %.

The term "split ratio" as used herein denotes the ratio of the total quantity of purification stream such as a vapor stream discharged from the device according to step (D) to the total quantity of the liquid stream fed to the device according to step

(C1) expressed in percent (liquid stream fed to the device according to step (C1) = 100 %).

In a preferred embodiment, the split ratio is below 60 %, more preferred below 40 %, still more preferred below 30 % or below 20 % or below 10 %.

In another preferred embodiment, the split ratio is in the range of from 60 to 5 %, further preferred 50 to 5 % or 40 to 5 % or 30 to 5 % or 20 to 5 % or 10 to 5%.

In a preferred embodiment, steps (A) to (E) are performed simultaneously, i.e. the process is a continuous process.

In another embodiment, the process may be performed discontinuously, i.e. as a batch process. In one embodiment, the device is filled with liquid provided by the liquid stream according to step (C1). Subsequently, steps (C2) and (D) are performed. Subsequent to the contacting according to step (D), the purified leucoindigo solution is discharged from the device according to step (E). The method may be repeated.

According to the invention, the device used in the method according to the invention is a column or comprises a column.

### Columns

The term "column" as used herein encompasses a hollow structural element, preferably a hollow cylindrical element, wherein the length exceeds the diameter. Neither the diameter nor the length is limited.

In one embodiment, length and diameter or the ratio of length to diameter of the column may be freely selected or may be optimized in view of the result to be achieved.

Preferably, the diameter is in the range of from 0.1 to 4 meters.

Preferably, the length is in the range of from 1 to 50 meters such as 1 to 30 meters.

In another embodiment, the diameter is in the range of from 0.1 to 4 meters and the length is in the range of from 1 to 30 meters.

In one embodiment, the column as defined herein is designed to be straight.

In another embodiment, the column as defined herein is designed not to be straight.

In another embodiment, the column is arranged in a horizontal manner.

In another embodiment, the column is arranged in a perpendicular manner.

In another embodiment, the column is provided in the form of a coil.

The arrangement in a perpendicular manner is preferred.

The column used in the method of the invention comprises n theoretical stages. The term "theoretical stage" as used herein encompasses a hypothetical zone or stage in which two phases, such as the liquid phase originating from the liquid stream and the purification phase such as a vapor phase originating from the purification stream as defined herein, establishes in the column an equilibrium with each other. Such equilibrium stages may also be referred to as an equilibrium stage or an ideal stage.

The number of theoretical stages required in the method according to the invention may depend on the particular type of column used. It may be determined according to methods known in the art, taking into account the desired degree of separation of aniline or aniline and N-methylaniline in the output fraction(s), i.e. obtained in in steps (D) and (E). It also may depend upon the amount of reflux used.

The final design choice of the number of stages to be applied in an industrial realization may then be selected based upon an economic balance between the cost of additional stages and the cost of using a higher reflux rate.

In one embodiment, the column may have from 5 to 50 theoretical stages.

In another embodiment, the column may have from 10 to 40 theoretical stages.

In one embodiment, the column may be operated at a pressure substantially equal to atmospheric pressure.

In another embodiment, the column may be operated at a pressure above atmospheric pressure.

According to the invention, the column may work at a pressure substantially equal to atmospheric pressure, i.e. in a range of 0.95*10⁵ Pa absolute (0.95 bara) to 1.2*10⁵ Pa absolute (1.2 bara). In such conditions, the temperature of the column is set in a range of from 95 °C to 110 °C.

In a further embodiment of the invention, the column may be operated using pressures above atmospheric pressure, e.g. a pressure of 1.2*10⁵ Pa absolute (1.2 bara) to 11*10⁵ Pa absolute (11 bara), e.g. at 7*10⁵ Pa absolute (7 bara). The temperature of the column is then set in a range 110 °C to 190 °C, e.g. in the range of 160 °C to 170 °C.

The temperatures quoted are measured at the bottom of the column and are dependent upon the quantity of vapor leaving the column at the top.

For heating, in one embodiment, a space heater is used. The term "space heater" as used herein encompasses a device used to heat a single, small area, e.g. the region of the bottom of the column. Accordingly, said space heater is preferably arranged at or near the bottom of the column.

In another embodiment, upper regions of the column are heated.

In another embodiment, the bottom as well as the upper regions of the column are heated.

If steam is used as purification or vapor feed according to step (C2), aniline is accompanied with water when leaving the column in the vapor phase according to step (D). The vapor comprising aniline and water vapor coming from the column may be condensed and cooled. The condensate may thereafter be separated in an aqueous phase, comprising water and aniline.

Some of the condensate may be returned to the top of the column, where it is used to knock down droplets and optionally solids in the vapor phase, which phase is to leave the column. This knocking down can be done using preferably a trayed section, although also a structured packing section might be used.

The device may be provided with defoaming means such as baffles, preferably installed in the lower part of the used column, if necessary at all.

In another embodiment, defoaming may be supported adding a defoamer to the leucoindigo solution to be purified. Although heterogeneous defoamers such as silicon oils may be used, it is preferred to use homogeneous defoamers which are dissolved in the leucoindigo solution, and which do not negatively affect the later oxidation of the purified leucoindigo to indigo.

Specifically, according to the invention, the device used in steps (C1) and (C2) is selected from the group consisting of plate column, packed column, and bubble column, or two or three thereof, or two or more of any of said columns.

The term "plate column" as used herein is synonymously used with the term "trayed tower" or "tray column".

Plate columns, packed columns, and bubble columns are known in the art.

In one embodiment, the column contains a sequence or sequences which is/are designed as plate column and a sequence or sequences which is/are designed as packed column in order to further optimize the method.

In another embodiment, the column contains a sequence or sequences which is/are designed as plate column and a sequence or sequences which is/are designed as packed column and a sequence or sequences which are designed as bubble column in order to further optimize the method.

In another embodiment, the column contains a sequence or sequences which is/are designed as plate column and a sequence or sequences which are designed as bubble column in order to further optimize the method.

In another embodiment, the column contains a sequence or sequences which is/are designed as packed column and a sequence or sequences which are designed as bubble column in order to further optimize the method.

In another embodiment, several plate columns, packed columns, or bubble columns, respectively, are connected in series in order to further optimize the method.

In another embodiment, a plate column is connected with a packed column or a bubble column in order to further optimize the method.

In another embodiment, a packed column is connected with a bubble column in order to further optimize the method.

In another embodiment, a plate column is connected with a packed column in order to further optimize the method.

In another embodiment, a plate column is connected with a packed column and a bubble column in order to further optimize the method.

In still another embodiment, a pre-purification is performed as disclosed in the prior art, wherein the final purification is performed with the method according to the invention.

The term "pre-purification" as used herein encompasses distilling off water from a respective leucoindigo salt solution, the extraction with a suitable organic solvent, a steam distillation or the stripping with nitrogen, or two or more thereof.

It is matter of course that in the method according to the invention presence of oxygen has to be excluded in order to prevent untimely oxidation of leucoindigo to indigo.

The used columns are discussed in the following in more detail.

### Plate column

In one embodiment, the device is a plate column.

In a preferred embodiment, the plate column is arranged in the form of a tower, i.e. it is arranged in a perpendicular manner.

In one embodiment, the height of the column is more than 5 meters, preferably 5 to 50 meters, and more preferred 10 to 40 meters.

In connection with a plate column, the theoretical stages are also termed as theoretical trays or theoretical plates.

The trays or plates are preferably fabricated of circular steel plates and usually installed inside the column at intervals of about 60 to 75 cm up the height of the column.

In one embodiment, the tray is a bubble-cap tray or a valve-cap tray.

The term "bubble-cap tray" as used herein encompasses a slotted cap on a central riser, wherein the gas flows up through the riser, and reverse flow is under the cap, passes downward through the annulus between riser and cap, and finally passes into the liquid through a series of openings or slots in the lower side of the cap.

The term "valve-cap tray" as used herein encompasses a tray with perforations which are covered by liftable caps. Vapor flow lifts the caps, thus self-creating a flow area for the passage of vapor. The lifting cap directs the vapor to flow horizontally into the liquid.

In one embodiment, the tray is a perforated tray, i.e. a sieve tray. The term "sieve tray" encompasses a tray in which the desired contacting between vapor and liquid occurs as the vapor, flowing upwards through the perforations, comes into contact with the liquid flowing downwards through the perforations.

In one embodiment, contacting is achieved by installing bubble-caps or valve caps at each perforation to promote the formation of vapor bubbles flowing through a thin layer of liquid maintained by a weir on each tray.

Accordingly, in one embodiment, the trays may be selected from perforated trays, bubble-cap trays or valve-cap trays, or two or three thereof.

Perforated trays, bubble-cap trays or valve-cap trays are known in the art.

In one embodiment, the feed to the plate column comprises or is a liquid stream provided according to step (A) and a purification stream such as a vapor stream provided according to step (B), which are fed into the column according to steps (C1) and (C2). Thus, two phases prevail inside the column, namely a vapor phase generated from the purification stream, and one liquid phase generated from the liquid stream. The liquid phase flows preferably downward through the column via gravity, while the vapor phase flows upward. These two phases come in contact in correspondence of holes, valves or bubble caps that fill the area of the plates. Vapor moves to the higher plate through these devices, while the liquid moves to the lower plate through e.g. a downcomer.

The liquid is collected at the bottom of the column while the vapor is collected at the top. The liquid and vapor produced at the top and at the bottom may be recirculated.

The vapor collected at the top according to step (D) contains aniline or aniline and N-methylaniline which have been removed from the leucoindigo solution.

The liquid collected at the bottom according to step (E) contains the purified leucoindigo solution.

### Packed column

In one embodiment, the plates of the plate column as disclosed above are replaced by packed sections, i.e. by sections comprising a filling material. Accordingly, the device used for purification is then a packed column.

In one embodiment, the packings may have a regular geometry such as stacked rings, grids, or proprietary structured rings, or saddles.

Rings are e.g. Raschig rings or pall rings.

Saddles may e.g. be Intalox® saddles.

In one embodiment, the packings may have an irregular shape.

The packings may be randomly arranged in the column, wherein rings, saddles, and proprietary shades are dumped into the column and take a random arrangement.

In another embodiment, the packings may be regularly arranged in the column.

Rings, saddles or proprietary structured shades may be made from a variety of materials such as ceramics, metals, plastics, and carbon.

In one embodiment, the use of structured packings such as wire mesh or perforated sheets is also possible.

The necessary height of the packing may be determined according to methods known in the art.

In one embodiment, the feed to the packed column comprises or is a liquid stream provided according to step (A) and a purification stream such as a vapor stream provided according to step (B), which are fed into the column according to steps (C1) and (C2). Thus, two phases prevail inside the column, namely a vapor phase generated from the purification stream, and one liquid phase generated from the liquid stream. The liquid phase flows preferably downward through the column via gravity, while the vapor phase flows upward. These two phases come in contact in correspondence of the packings or the filling materials of the packed column. Vapor moves to the higher packings through these devices, while the liquid move to the lower packings through e.g. a downcomer.

The liquid is collected at the bottom of the packed column while the vapor is collected at the top. The liquid and vapor produced at the top and at the bottom may be recirculated.

The vapor collected at the top according to step (D) contains aniline or aniline and N-methylaniline which have been removed from the leucoindigo solution.

The liquid collected at the bottom according to step (E) contains the purified leucoindigo solution.

### Bubble column

In one embodiment, the plates or the packings as disclosed in connection with a plate column or a packed column are removed from the column.

Accordingly, the device may be designed as a bubble column.

The term "bubble column" as used herein is synonymously used with the term "bubble column reactor".

In its most simple form a bubble column as used in the method according to the invention consists of a vertical cylinder with a vapor distributor at the purification stream inlet. Such bubble column may be designed as a single-stage bubble column.

The vapor phase provided by the purification stream or vapor stream according to step (B) is dispersed by the distributor into bubbles entering the liquid phase.

The liquid phase provided by the liquid stream according to step (A) may move co-currently or counter-currently to the flow of the vapor stream.

In one embodiment, the feed to the bubble column comprises or is a liquid stream provided according to step (A) and a vapor stream provided according to step (B), which are fed into the column according to steps (C1) and (C2). Thus, two phases prevail inside the column, namely a vapor phase generated from the purification stream, and one liquid phase generated from the liquid stream. The liquid phase flows preferably downward through the column via gravity, while the vapor phase flows upward.

The liquid is collected at the bottom of the bubble column while the vapor is collected at the top. The liquid and vapor produced at the top and at the bottom may be recirculated.

The vapor collected at the top according to step (D) contains aniline or aniline and N-methylaniline which have been removed from the leucoindigo solution.

The liquid collected at the bottom according to step (E) contains the purified leucoindigo solution.

As is known, the efficacy of a bubble column may depend on the shape and velocity of the bubbles. In one embodiment, the ranges of liquid and vapor superficial velocities, based on empty reactor cross-sectional area, are selected such to be in the region of 0 to 3 cm/s and 3 to 25 cm/s, respectively.

In one embodiment, said bubble column preferably contains means for controlling the bubbles, i.e. it preferably contains a flow control system.

Furthermore, the properties such as the velocity, shape and area of the bubbles may be studied by known image processing techniques in order to optimize the efficacy of the bubble column.

In one embodiment, the ratio between length and diameter of the bubble reactor is between 3 and 10.

In other embodiments, the design of a single-stage bubble column may be varied according to respective columns known in the art.

In one embodiment, the bubble column may be designed as a multi-stage bubble column, i.e. a bubble column cascade. In one embodiment, said cascade may comprise sieve trays.

In another embodiment, the bubble column may be designed as a loop reactor such as a mammoth loop reactor or a jet loop reactor.

### Preparation of the starting material

The leucoindigo solution used in the method according to the invention as defined in the **first aspect** is prepared according to methods known in the art, i.e. by subjecting an aqueous composition comprising indigo from various sources or newer known syntheses to a step of reduction in the presence of alkali metal hydroxide.

Accordingly, the method according to the invention comprises step (0) prior to step (A):
(0) subjecting an aqueous composition comprising indigo which contains aniline or aniline and N-methylaniline, to reduction in the presence of an alkali metal hydroxide in order to generate an aqueous leucoindigo solution comprising said aromatic amine(s), wherein said leucoindigo is in the form of an alkali metal salt.

Preferably, reduction is performed as hydrogenation. Hydrogenation may be performed by methods known in the art.

A preferred reduction is hydrogenation using Raney-Nickel as catalyst.

Other known methods are e.g. reduction using sodium dithionite, reduction by electrolysis such as indirect electrolysis using triethanolamine complexes of iron as mediators, and reduction using indoxyl. It should be understood that the reduction is not limited to the mentioned reduction methods.

According to the invention, said leucoindigo is in the form of an alkali metal salt.

The term "alkali metal" encompasses lithium, sodium and potassium and combinations of two or three thereof.

Accordingly, in one embodiment, the alkali metal may be lithium or sodium or potassium.

In another embodiment, the alkali metal may be lithium and sodium, or lithium and potassium, or sodium and potassium.

In another embodiment, the alkali metal may be lithium, sodium and potassium.

The term "lithium, sodium, and potassium" means the respective cations thereof.

The amount of alkali metal in the leucoindigo salt essentially corresponds to an amount which stoichiometrically corresponds to the amount which is necessary for the complete formation of the leucoindigo salt. Preferably, the salt and/or the solution contains from 1.5 to 2.5 mole alkali per mole leucoindigo, more preferably of from 2.0 to 2.5 mole alkali, still more preferred of from 2.1 to 2.5 mole alkali.

In one embodiment, the salt is a sodium salt, e.g. the salt defined in WO 94/23114.

In one embodiment, the salt is in the form of a mixed alkali metal salt such as a mixed sodium and potassium salt.

In one embodiment, sodium and potassium are present in a molar ratio as defined in WO 00/004100, e.g. in a molar ratio of from 2.33 : 1 to 1 : 2.33.

In another embodiment, sodium and potassium are present in a molar ratio of from above 3 : 1 to 10 : 1 such as 4 : 1 to 8 : 1 or 5 : 1 to 7 : 1.

The person skilled in the art is capable of selecting suitable concentration ranges in which the respective purified leucoindigo solutions made from the non-purified leucoindigo solutions are stable depending on the used molar ratios of the alkali metals.

Thus, within the addressed molar ranges of sodium to potassium, stable and concentrated solutions may be prepared.

In a preferred embodiment, the leucoindigo salt is provided in the form of a mixed alkali metal salt, preferably a mixed sodium and potassium salt, further preferably in a molar ratio of sodium to potassium in the range of from 2.33 : 1 to 1 : 2.33.

It is possible to provide the required amount of alkali metal hydroxide at once prior to the hydrogenation or in portions during the hydrogenation, or prior and during the hydrogenation. If necessary, additional alkali may also be added after the hydrogenation.

The concentration of the salt obtained in step (0) or provided in step (A) can be chosen within broad boundaries and is not restricted to particular requirements.

In one embodiment, the concentration of the leucoindigo salt in the solution obtained in step (0) or provided in step (A) is in the range of from 5 to 65 % by weight, based on the total weight of the solution obtained in step (0) or provided in step (A) such as 10 to 60 % by weight or 15 to 55 % by weight or 20 to 50 % by weight.

In another embodiment, the concentration of the leucoindigo salt in the solution obtained in step (0) or provided in step (A) is in the range of from 10 to 35 % by weight, based on the total weight of the solution obtained in step (0) or provided in step (A).

As discussed in the Background section above, a leucoindigo salt solution obtained by reduction of indigo contains an aromatic amine in the form of aniline or aniline and N-methylaniline stemming from the commonly used production processes of indigo.

In one embodiment, the concentration of said aromatic amine in the solution obtained in step (0) or provided in step (A) prior to purification is in the range of from 2,000 ppm to 10,000 ppm.

In one embodiment, the concentration of aniline is in the range of from 1,000 ppm to 3,000 ppm and the concentration of N-methylaniline is in the range of from 500 to 2,000 ppm.

### Stable aqueous leucoindigo solution

If steam is used as purification stream, the concentration of leucoindigo in the purified liquid stream discharged from the device according to step (E) may be lower than the concentration of leucoindigo in the liquid stream provided in step (A), respectively in the liquid stream fed to the device according to step (C1) due to condensing steam fed to the device according to step (C2).

The solution obtained in step (E) may be concentrated with respect to the solution used in step (A), e.g. by distilling off water until a desired concentration is achieved.

In another embodiment, when steam is used in step (C2) which is generated by heating at least a portion of said liquid stream that has been discharged from the device according to step (E), also a concentration of leucoindigo may result.

The purified leucoindigo solution obtained in step (E) may also be diluted by adding water, if necessary.

Accordingly, the concentration of the purified leucoindigo solution obtained in step (E) may be adjusted according to the desired application, either by distilling off water or by adding water.

In another embodiment, the method according to the invention may be performed such that the concentration of the purified leucoindigo solution obtained in step (E) is equal to the concentration of the non-purified leucoindigo solution provided in step (A).

In one embodiment, the concentration of the leucoindigo salt obtained in the purified solution according to step (E) is adjusted to a range of from 45 to 65 % by weight, based on the total weight of the solution.

In one embodiment, the concentration of the leucoindigo salt in the solution obtained in step (0) or provided in step (A) is adjusted to a range of from 5 to 65 % by weight such as 10 to 60 % by weight or 15 to 55 % by weight or 20 to 50 % by weight, based on the total weight of the solution obtained in step (0) or provided in step (A), and the concentration of the leucoindigo salt in the purified solution is in the range of from 40 to 65 % by weight, based on the total weight of the solution.

Thus, in one embodiment, the concentration of the leucoindigo salt in the purified solution is in the range of from 40 to 65 % by weight, based on the total weight of the solution.

If necessary, the solution obtained after purification may be diluted to a concentration range adapted to application or stability requirements.

In one embodiment, the concentration is adjusted to a range of from 10 to 45 % by weight such as 15 to 45 % by weight or such as 10 to 40 % by weight, if necessary by addition of water. Other suitable concentration ranges are e.g. 20 to 45 % by weight or 25 to 45 % by weight or 20 to 40 % by weight or 25 to 40 % by weight.

It is a matter of course that upon dilution the concentration of aromatic amine is further decreased.

In one embodiment, the concentration of the leucoindigo salt is adjusted to a concentration range of from 10 to 45 % by weight based on the total weight of the solution such as 15 to 45 % by weight or 20 to 45 % by weight or 25 to 45 % by weight or 10 to 40 % by weight or 20 to 40 % by weight or 25 to 40 % by weight in order to provide a at stable leucoindigo salt solution, and wherein the stability of the solution is measured at a temperature of 23 °C.

The term "stability of the solution" refers to a solution which is not prone to crystallization or precipitation at the specified temperature.

In one embodiment, the concentration of the leucoindigo salt is adjusted to a concentration range of from 45 to 65 % by weight based on the total weight of the solution, and wherein the stability of the solution is measured at a temperature of 60 °C.

According to the invention, aniline and N-methylaniline are removed from the leucoindigo solution to an aniline and N-methylaniline concentration below 100 ppm, preferably below 80 ppm, more preferred below 60 ppm.

In a particularly preferred embodiment, the concentration of aniline and N-methylaniline is below 40 ppm, in particular below 30 ppm or below 20 ppm, and particularly preferred below 10 ppm or below 5 ppm, the concentration being determined according to ISO 14362-1:2017(E).

According to **another aspect** a stable aqueous leucoindigo solution is disclosed comprising an aromatic amine in the form of aniline or aniline and N-methylaniline, wherein said leucoindigo is in the form of an alkali metal salt;
wherein the concentration of the aniline or aniline and N-methylaniline is below 100 ppm, preferably below 80 ppm, more preferred below 60 ppm, still more preferred below 40 ppm, in particular below 30 or below 20 ppm, and particularly preferred below 10 ppm or below 5 ppm, the concentration being determined according to ISO 14362-1:2017(E), i.e. leucoindigo solution is aniline-free or aniline-free and N-methylaniline-free; and
wherein the concentration of the leucoindigo salt is in a concentration range of from 10 to 45 % by weight based on the total weight of the solution such as 15 to 45 % by weight or 20 to 45 % by weight or 25 to 45 % by weight, and wherein the stability of the solution is measured at a temperature of 23 °C; or
wherein the concentration of the leucoindigo salt is in a concentration range of from 45 to 65 % by weight such as 45 to 60 % by weight based on the total weight of the solution, and wherein the stability of the solution is measured at a temperature of 60 °C.

In a particularly preferred embodiment, the concentration of aniline or aniline and N-methylaniline is below 40 ppm, in particular below 30 ppm or below 20 ppm, the concentration being determined according to ISO 14362-1:2017(E).

In a further particularly preferred embodiment, the concentration of aniline or aniline and N-methylaniline is below 10 ppm or below 5 ppm,

In one embodiment, the aqueous leucoindigo solution according to the invention is obtainable by a method as defined in the **first aspect.**

The obtained leucoindigo salt may be converted to indigo or may be used in a vat dyeing process for dyeing a textile.

### Method of making indigo

Accordingly, in a **third aspect,** a method of making indigo is disclosed, comprising step (II):
(II) oxidizing the aqueous leucoindigo solution as defined in the ***second aspect.***

In one embodiment, the method comprises step (I) prior to step (II):
(I) treating a textile with the leucoindigo solution to be oxidized.

### Integrated apparatus

According to a **fourth aspect,** an integrated apparatus is disclosed, comprising:
a reduction apparatus configured to reduce indigo comprising aniline or aniline and N-methylaniline in order to make an aqueous leucoindigo solution comprising said amine(s), wherein said leucoindigo is in the form of an alkali metal salt, and
a purification apparatus configured to make an aqueous aniline-free or aniline-free and N-methylaniline-free leucoindigo solution from an aqueous leucoindigo solution comprising aniline or aniline and N-methylaniline, the concentration of aniline or aniline and N-methylaniline being determined according to ISO 14362-1:2017(E),
wherein said leucoindigo is in the form of an alkali metal salt; the purification apparatus comprising:
   (α) first means configured to provide a liquid stream comprising an aqueous leucoindigo solution comprising aniline or aniline and N-methylaniline, wherein said leucoindigo is in the form of an alkali metal salt;
   (β) second means configured to provide a purification stream;
   (γ) third means comprising a device configured
      (y1) to feed said liquid stream and said purification stream into said device;
      (y2) further configured to bring into contact said liquid stream with said purification stream; and
      (y3) further configured to discharge from the device at least a portion of said purification stream that has contacted said liquid stream, and to discharge from the device at least a portion of said liquid stream that has been contacted by said purification stream;
   (δ) fourth means configured to receive at least a portion of the liquid stream that has been discharged from the device.

The term "reduction apparatus configured to reduce indigo comprising aniline or aniline and N-methylaniline in order to make an aqueous leucoindigo salt solution comprising said amine(s)" encompasses a reduction apparatus comprising respective reduction means such as means configured to provide hydrogen.

In one embodiment, the first means (α) is a storage tank for the leucoindigo salt solution to be purified.

In another embodiment, the first means (α) is the reduction device.

In one embodiment, the second means (β) is a container accommodating purification means such as an inert gas, a gaseous organic solvent which is not miscible with water, or steam, or two or three thereof.

In one embodiment, the device comprised in said third means (y) is selected from the group consisting of plate column, packed column, and bubble column, or two or three thereof, or two or more of any of said columns.

The configuration according to (y1) preferably provides pipes from (α) and (β) to vapor inlet(s) and liquid inlet(s) of the device, and the vapor inlet(s) and liquid inlet(s).

In one embodiment, the configuration according to (γ2) provides plates (trays) or filling materials within the device.

The configuration according to (γ3) preferably provides liquid stream outlet(s) and purification stream outlet(s) such as vapor outlet(s) and pipes to respective collecting or storage containers for accommodating removed aniline or aniline and N-methylaniline and purified leucoindigo salt solution.

In one embodiment, the fourth means (δ) is a storage container, which preferably may be heated.

In a particularly preferred embodiment, the fourth means comprises the second means or is the second means.

### EXAMPLES

### Example 1 (Comparative)

1,000 g of a 30 % by weight leucoindigo solution (containing 6.5 % by weight alkali metal, 2,495 ppm aniline and 1,480 ppm N-methylaniline) were subjected to distillation at ambient pressure. After 470 ml water had been distilled off, a 57 % by weight solution was obtained. The content of aniline in the obtained concentrated solution was 173 ppm and the N-methylamine concentration was 9 ppm determined according to ISO 14362-1:2017(E).

### Example 2 (according to the invention)

A cylindrical multiple plate column having a diameter of 0.10 m and a height of 3 m and being provided at the bottom thereof with a space heater was purged and kept under inert conditions. The space heater was set such that the liquid at the bottom of the column was heated to a temperature of 95-110 °C. The temperature was controlled during the experiment. The column was filled with 5-10 kg of the leucoindigo solution used in Example 7. Further leucoindigo solution was transferred into a feeding vessel which was kept at 25 °C. The solution was fed to the column via a pump. Simultaneously, high pressure steam was inserted into the column via a sparger at the bottom of the column. Purified solution was then continuously collected from the column.

Purification settings, such as temperature and flow rate, were selected in the way that various splits were achieved in the range of 10-60%. The mass balance and split were determined based on the amounts of distillate and residue collected.

Samples from the bottom of the column were analyzed in terms of aniline/N-methylaniline (NMA) content determined according to ISO 14362-1:2017(E). The solution was aniline-free and N-methylaniline-free as determined according to ISO 14362-1:2017(E).

## Claims

1. Method of making an aqueous aniline-free or aniline-free and N-methylaniline-free leucoindigo solution from an aqueous leucoindigo solution comprising aniline or aniline and N-methylaniline, the concentration of aniline or aniline and N-methylaniline being determined according to ISO 14362-1:2017(E), wherein the term "aniline-free and N-methylaniline-free" defines an aniline and N-methylaniline concentration below 100 ppm, wherein said leucoindigo is in the form of an alkali metal salt, the method comprising at least steps (A) to (C):
(A) providing a liquid stream comprising said aqueous leucoindigo solution comprising said amine(s);
(B) providing a purification stream;
(C) bringing into contact said liquid stream with said purification stream;
wherein step (C) comprises steps (C1) and (C2), and the method further comprises steps (D) and (E):
(C1) feeding said liquid stream and
(C2) feeding said purification stream
into a device configured to bring into contact said liquid stream with said purification stream;
(D) discharging from the device at least a portion of said purification stream that has contacted said liquid stream; and
(E) discharging from the device at least a portion of said liquid stream that has been contacted by said purification stream;
wherein the purification stream is a vapor stream;
wherein said vapor stream comprises steam;
wherein the device is selected from the group consisting of plate column, packed column, or bubble column, or two or three thereof, or two or more of any of said columns; and wherein
the column is operated at a pressure in a range of from 0.95*10⁵ Pa absolute (0.95 bar) to 1.2*10⁵ Pa absolute (1.2 bar); and the temperature of the column is set in a range of from 95 °C to 110 °C; or
the column is operated at a pressure of 1.2*10⁵ Pa absolute (1.2 bar) to 11*10⁵ Pa absolute (11 bar); and wherein the temperature of the column is set in a range of from 110 °C to 190 °C;
wherein the temperatures quoted are measured at the bottom of the column.

2. Method of claim 1, wherein the liquid stream and the purification stream are counter-current streams.

3. Method of claim 1 or 2, wherein said steam is generated by heating at least a portion of said liquid stream that has been discharged from the device according to step (E).

4. Method of any one of claims 1 to 3, wherein steps (A) to (E) are performed simultaneously.

## Patentansprüche

1. Verfahren zum Herstellen einer wässrigen anilinfreien oder anilinfreien und N-methylanilinfreien Leukoindigolösung aus einer wässrigen Leukoindigolösung, die Anilin oder Anilin und N-Methylanilin aufweist, wobei die Konzentration von Anilin oder Anilin und N-Methylanilin gemäß ISO 14362-1:2017(E) bestimmt wird, wobei der Ausdruck _{"}anilinfrei und N-methylanilinfrei" eine Anilin- und N-Methylanilinkonzentration unter 100 ppm definiert, wobei das Leukoindigo in Form eines Alkalimetallsalzes vorliegt, wobei das Verfahren zumindest Schritte (A) bis (C) aufweist:
(A) Bereitstellen eines Flüssigstroms, der die wässrige Leukoindigolösung aufweist, die das eine oder die mehreren Amine aufweist;
(B) Bereitstellen eines Reinigungsstroms;
(C) Inkontaktbringen des Flüssigstroms mit dem Reinigungsstrom;
wobei Schritt (C) Schritte (C1) und (C2) aufweist und das Verfahren ferner Schritte (D) und (E) aufweist:
(C1) Zuführen des Flüssigstroms, und
(C2) Zuführen des Reinigungsstroms
in eine Vorrichtung, die konfiguriert ist, um den Flüssigstrom mit dem Reinigungsstrom in Kontakt zu bringen;
(D) Ausgeben zumindest eines Teils des Reinigungsstroms, der mit dem Flüssigstrom in Kontakt gebracht wurde, aus der Vorrichtung; und
(E) Ausgeben zumindest eines Teils des Flüssigstroms, der mit dem Reinigungsstrom in Kontakt gebracht wurde, aus der Vorrichtung;
wobei der Reinigungsstrom ein Dampfstrom ist;
wobei der Dampfstrom Wasserdampf aufweist;
wobei die Vorrichtung aus der Gruppe ausgewählt ist, die aus Bodenkolonnen, Füllkörperkolonnen oder Blasensäulen oder zwei oder drei davon oder zwei oder mehr irgendeiner der Kolonnen bzw. Säulen besteht; und wobei die Kolonne bzw. Säule bei einem Druck in einem Bereich von 0,95 x 10⁵ Pa absolut (0,95 bar) bis 1,2 x 10⁵ Pa absolut (1,2 bar) betrieben wird; und die Temperatur der Kolonne bzw. Säule in einem Bereich von 95 °C bis 110 °C eingestellt ist; oder
die Kolonne bzw. Säule bei einem Druck von 1,2 x 10⁵ Pa absolut (1,2 bar) bis 11 x 10⁵ Pa absolut (11 bar) betrieben wird; und wobei die Temperatur der Kolonne bzw. Säule in einem Bereich von 110 °C bis 190 °C eingestellt ist; wobei die angegebenen Temperaturen am Boden der Kolonne bzw. Säule gemessen werden.

2. Verfahren nach Anspruch 1, wobei der Flüssigstrom und der Reinigungsstrom Gegenströme sind.

3. Verfahren nach Anspruch 1 oder 2, wobei der Wasserdampf durch Erhitzen zumindest eines Teils des Flüssigstroms, der aus der Vorrichtung gemäß Schritt (E) ausgegeben wurde, erzeugt wird.

4. Verfahren nach einem der Ansprüche 1 bis 3, wobei die Schritte (A) bis (E) gleichzeitig durchgeführt werden.

## Revendications

1. Procédé de fabrication d'une solution aqueuse de leucoindigo exempte d'aniline ou exempte d'aniline et de N-méthylaniline à partir d'une solution aqueuse de leucoindigo comprenant de l'aniline ou de l'aniline et de la N-méthylaniline, la concentration en aniline ou en aniline et en N-méthylaniline étant déterminée selon la norme ISO 14362-1:2017(E), dans lequel le terme « exempte d'aniline et de N-méthylaniline » se rapporte à une concentration en aniline et une concentration en N-méthylaniline inférieure à 100 ppm, dans lequel ledit leucoindigo est sous la forme d'un sel de métal alcalin, le procédé comprenant au moins les étapes (A) à (C) :
(A) fournir un flux liquide comprenant ladite solution aqueuse de leucoindigo comprenant ladite ou lesdites amine(s) ;
(B) fournir un flux de purification ;
(C) mettre en contact ledit flux liquide avec ledit flux de purification ;
dans lequel l'étape (C) comprend les étapes (C1) et (C2), et le procédé comprend en outre les étapes (D) et (E) :
(C1) introduire ledit flux liquide et
(C2) introduire ledit flux de purification
dans un dispositif configuré pour mettre en contact ledit flux liquide avec ledit flux de purification ;
(D) retirer du dispositif au moins une partie dudit flux de purification qui est entré en contact avec ledit flux liquide ; et
(E) retirer du dispositif au moins une partie dudit flux liquide qui a été mis en contact avec ledit flux de purification ; et
dans lequel le flux de purification est un flux vapeur ;
dans lequel ledit flux vapeur comprend de la vapeur d'eau ;
dans lequel le dispositif est choisi parmi le groupe constitué d'une colonne à plateaux, d'une colonne à garnissage ou d'une colonne à bulles, ou de deux ou trois de celles-ci, ou de deux ou plus de l'une quelconque desdites colonnes ; et dans lequel
la colonne est utilisée à une pression comprise entre 0,95*10⁵ Pa absolu (0,95 bar) et 1,2*10⁵ Pa absolu (1,2 bar) ; et la température de la colonne est paramétrée entre 95 °C et 110 °C; ou
la colonne est utilisée à une pression comprise entre 1,2*10⁵ Pa absolu (1,2 bar) et 11*10⁵ Pa absolu (11 bar) ; et dans lequel la température de la colonne est paramétrée entre 110 °C et 190 °C;
dans lequel les températures citées sont mesurées en fond de la colonne.

2. Procédé selon la revendication 1, dans lequel le flux liquide et le flux de purification sont des flux à contre-courant.

3. Procédé selon la revendication 1 ou 2, dans lequel ladite vapeur d'eau est générée par chauffage d'au moins une partie dudit flux liquide qui a été retiré du dispositif selon l'étape (E).

4. Procédé selon l'une quelconque des revendications 1 à 3, dans lequel les étapes (A) à (E) sont réalisées simultanément.
